# EUROPEAN PATENT APPLICATION

(11) **EP 1 798 675 A1**
(43) Date of publication of application: **20.06.2007**
(21) Application number: 05111707.5
(22) Date of filing: 05.12.2005
(51) Int. Cl.: G06Q 10/00

(54) **Consolidation of third party order processing items**

(71) Applicant: SAP AG, 69190 Walldorf (DE)
(72) Inventor: von Helmolt, Hans-Ulrich, 69126 Heidelberg (DE); Kreuels, Carsten, 66497 Contwig (DE); Deeg, Günther, 66386 St. Ingbert (DE)
(74) Representative: Schneider, Günther Martin

(57) **Abstract**

A computer-implemented method for processing, within a supply chain management system, a product order received from a customer, the method comprising steps of: determining, based on the received order, a consolidation location for the products; performing a TPOP check for at least a part of the products at a location which is external with respect to the supply chain management system; shipping the products found to be available at the external location to the consolidation location; and processing the products at the consolidation location.

## Description

### BACKGROUND OF THE INVENTION

The present invention relates to methods and systems for managing products within e-business systems. More particularly, the present invention relates to methods and systems for optimizing the delivery process of ordered products from a supplier to a customer via a consolidation location within a supply chain management system.

Today, the success of a business company depends essentially on the requirement that customer demands on goods and/or services be fulfilled precisely, cost-efficiently and in time. Therefore, many companies make use of a supply chain management system to control and optimize their production and delivery processes.

Supply chain management may comprise the process of coordinating the flow of goods, services, information and/or finances between the involved parties such as manufactures, suppliers, wholesalers, retailers, and consumers. This process may include, among others, order processing, information feedback, and timely delivering the ordered goods and/or services.

### STATE OF THE ART

One process within supply chain management is the check as to whether a quantity of products (ordered by a customer) is available at some location (e.g., warehouses, production plants) at a given time. This is denoted in the following as Available-to-Promise (ATP) check. The various ways to select particular locations and to check these locations as to availability of the quantity of products may be defined in a number of rules. In the following, these rules are denoted as ATP rules. The rules to be applied may be determined based on the particular order which is to be ATP checked.

Sometimes the whole quantity of products is found to be available only at several locations taken together. Then, the products may be shipped from these locations directly to the customer.

In some cases, however, it is desired to ship the products to a particular location where they are processed in a certain way, before they are shipped to the customer. This process is denoted in the following a consolidation process. A reason for that may be the need to send the ordered products with just one delivery to the customer. A further reason may be foreign trade or export business, for example, if only a particular location has the capability to prepare export licenses.

If an external supplier is involved in the supply chain, then the products of this external supplier are delivered directly from the external supplier to the customer.

### SUMMARY OF THE INVENTION

In general, in one aspect, this invention provides a computer-implemented method for processing, within a supply chain management system, a product order received from a customer, the method comprising the following steps:
determining, based on the received order, a consolidation location for the products;
performing a TPOP check for at least a part of the products at a location which is external with respect to the supply chain management system;
shipping the products found to be available at the external location to the consolidation location; and
processing the products at the consolidation location.

Further embodiments of the invention can comprise the following features.

In one embodiment of the invention the consolidation location is an internal location with respect to the supply chain management system.

A further embodiment of the invention comprises steps of:
performing, based on the determined consolidation location, an availability-to-promise check for a part of the products at a location which is internal with respect to the supply chain management system; and
processing the products found to be available at the internal location at the consolidation location.

In one embodiment, the at least one internal location belongs to a supplier of the products.

Further, the method may comprise a step of shipping the processed products from the consolidation location to the customer.

Yet further, the method may comprise a step of shipping the processed products within one delivery from the consolidation location to the customer.

The step of determining a consolidation location may comprise evaluating a number of rules which specify a number of consolidation locations, whereby the at least one rule further specifies a substitution requirement which initiates third party order processing.

In a further embodiment, the consolidation location is specified by a system which is external with respect to the supply chain management system.

Furthermore, the invention may provide an apparatus comprising
a data storage device within a supply chain management system for storing at least data about a plurality of products ;
means for receiving and processing a customer order;
means for determining at least one consolidation location;
means for performing a TPOP check for products at a location which is external with respect to the supply chain management system;
means for shipping products from the external location to the consolidation location; and
means for processing the products at the consolidation location.

Furthermore, the invention may comprise a computer-readable medium comprising computer-executable instructions for performing the method according to the inventive method, when loaded into a computer system.

Consolidation according to the invention allows processing deliveries at a special location before shipped to the customer. One advantage of this invention is that deliveries from external suppliers are first shipped to the special location - the consolidation location - in order to process the delivery before being delivered to the customer.

### BRIEF DESCRIPTION OF DRAWINGS

The accompanying drawings, which constitute a part of this disclosure, illustrate various embodiments and aspects of the present invention and, together with the description, explain the principles of the invention.

In the drawings:
- Fig. 1a: illustrates a delivery process using a consolidation location;
- Fig. 1b: illustrates a delivery process from an external supplier to the customer;
- Fig. 1c: illustrates a delivery process integrating the external supplier into the consolidation process;
- Fig. 2: illustrates the program flow according to the inventive method;
- Fig. 3: illustrates a program flow of a part of the inventive method;
- Fig. 4: illustrates the controller structure;
- Fig. 5: illustrates a program flow for building-up the controller structure; and
- Fig. 6: illustrates a tree representation according to the controller structure.

### DETAILED DESCRIPTION

Consolidation of deliveries means that these deliveries are to be processed at a special location, before they are shipped to the customer. The location where consolidation is done is denoted consolidation location. A reason for performing consolidation may be the need to send the ordered products with just one delivery to the customer. A further reason may be foreign trade or export business, for example, if only the consolidation location has the capability to prepare export licenses. Furthermore, in the consolidation location it is possible to merge several deliveries coming from different locations, also from external supplier locations, into one delivery. The products of the internal locations are shipped using stock transfer orders to the consolidation location, i.e. the consolidation location is the target location of a stock transfer order. A stock transfer order is a purchase order used to request or instruct a plant or location to transport products from one plant or location to another plant or location within the same enterprise. A consolidation location is defined in an ATP rule or may be overridden by an external software system, for example by a CRM sales order.

Which consolidation location is used for a delivery may be defined in a plurality of ATP rules, whereby the determination of the corresponding ATP rules to be applied is done based on a plurality of parameters, which come along with the corresponding order, for example customer or order fields. The ATP rules may also define alternative products for products which are temporarily not available, or for products for which successor products are available. Furthermore, the ATP rules may define alternative product locations, for example if a product is not available during an availability check with a first product location. In this way, the consolidation locations may be freely defined according to different business requirements, the delivery of products may be better optimized and the customers demand to deliver the ordered products in only one single delivery may be considered during the delivery process even if a part of the ordered products is provided by an external supplier.

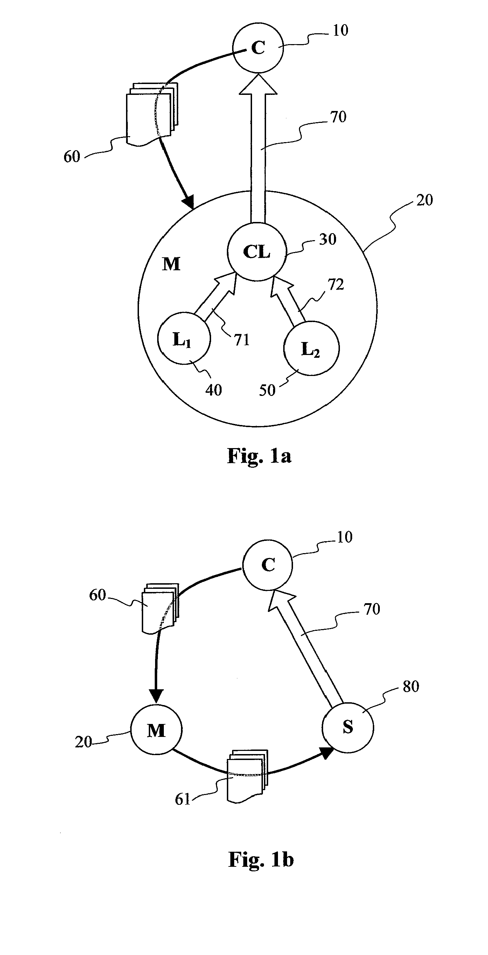

Fig. 1a illustrates an exemplary delivery process in which consolidation is performed at a consolidation location 30. The customer 10 sends an order 60 to the supplier 20. The order 60 may be in the form of an electronic order transmitted by email or a traditional order transmitted by mail. The order 60 comprises at least information about the ordered product and the ordered quantity. The supplier 20 feeds the data about the order 60 into the supply chain management system which processes this order 60.

Within the supply chain management system an availability check with respect to the ordered products is performed. Thereby, the product locations 40 and 50, which are internal locations with respect to the supply chain management system, are identified as product locations which can provide the ordered quantity of products, whereby each of the product locations 40 and 50 may provide a part of the products according to the customer order 60. These parts are delivered as two partial deliveries 71 and 72 from the product locations 40 and 50 to the consolidation location 30.

At the consolidation location 30 these two partial deliveries 71 and 72 are processed according several requirements. These requirements may be preparing export licenses or transport documents. After that process the products can be delivered as one single delivery 70 or multiple shipments from the consolidation location 30 to the customer 10.

Fig. 1b shows an example of a delivery process from an external supplier to the customer. As in Fig. 1a, the customer 10 sends an order 60 to the supplier 20. In this embodiment the supplier 20 is represented by a manufacturer. The order 60 may be in the form of an electronic order transmitted by email or a traditional order transmitted by ordinary mail. The order 60 comprises at least information about the ordered product and the ordered quantity. The supplier 20 checks whether an external supplier can deliver the ordered products to the customer 10. This check may be done based on stored data about the external supplier, e.g. product data, contract data or scheduling agreements, in the supply chain management system with the supplier 20. If the supplier 20 finds an external supplier, the supplier 20 orders the products from the external supplier 80 by sending a third-party purchase order. The purchase order may comprise a part of the order 60 or the whole order 60. In one embodiment, the external supplier may also be an internal supplier. The supplier 80 checks whether he can fulfill the received order 61. This second check with the external supplier 80 is necessary because it is possible that the data with the supplier 20 may be out of date.

If supplier 80 can fulfill the order 61, he delivers 70 the ordered products, or a part of them, to the customer 10. If the supplier 80 is an external supplier, then the delivery process shown in Fig. 1b describes a type of external procurement and is called 'third party order processing'. In the following, the abbreviation TPOP is used for the term third party order processing.

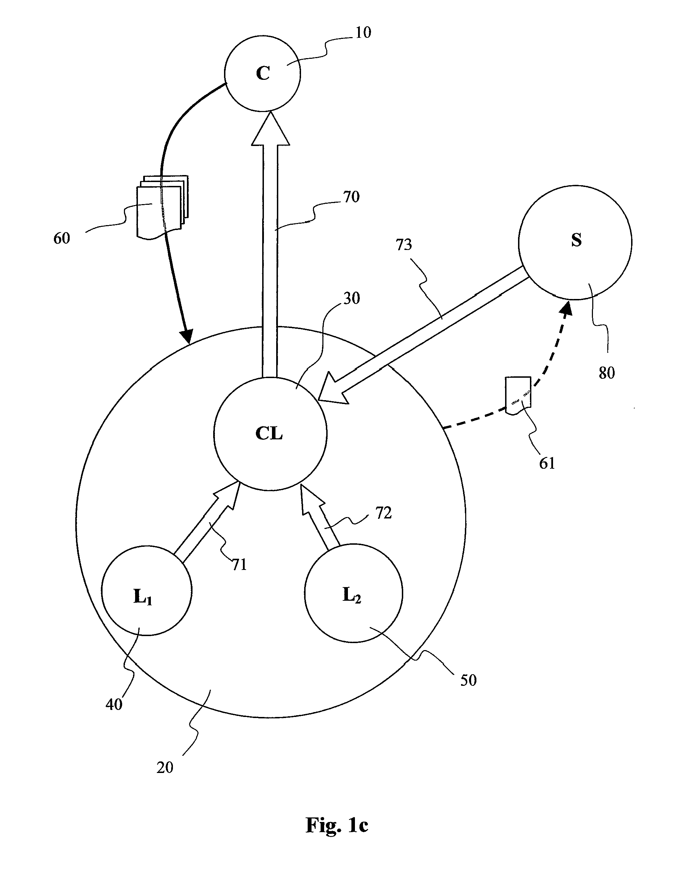

Fig. 1c shows an example of a delivery process whereby the delivery of the external supplier is first shipped to the consolidation location before being delivered to the customer. The internal supplier locations 40, 50 and the consolidation location 30 belong to the supplier 20. The external supplier 80 represents a third party supplier and does not belong to the supplier 20.

Accordingly, the customer 10 sends an order 60 to the supplier 20. The order 60 may be again in the form of an electronic order transmitted by email or a traditional order transmitted by mail. The order 60 comprises at least information about the ordered product and the ordered quantity. In one embodiment, the order 60 may additionally comprise the customer requirement that the ordered products should be delivered as one single delivery to the customer 10. The supplier 20 feeds the data about the order 60 into the supply chain management system which processes this order 60. The supply chain management system holds miscellaneous information about a plurality of products. Such information may comprise the location in which the products are available and in which quantity the products are available. The ordered products may be provided by the internal locations 40, 50 and the consolidation location 30.

In one embodiment, the supply chain management system after receiving the customer order 60, performs an availability check process. In order to optimize the route of transportation and the transportation costs, the availability check process first checks the consolidation location 30 for availability of the ordered products and then, if the consolidation location does not confirm the required quantity of products, the internal locations 40, 50. If the internal locations 40, 50 are able to provide the required quantity of products, the supply chain management system creates stock transfer orders for the corresponding internal locations 40, 50.

If there remains a quantity of products which is not confirmed by these availability checks, the availability check process attempts to determine further locations which are able to provide the remaining quantity of products. In this example such a location may be the external supplier location 80.

The supply chain management system with the supplier 20, additionally to the information about products with the internal locations 40, 50 and with the consolidation location 30, holds information about external suppliers, especially about the products to be provided. Therefore, the supply chain management system is able to determine external suppliers which can provide the remaining quantity of products.

If such an external supplier 80 exists, then the supply chain management system creates a purchase order 61 and forwards this order 61 to the external supplier 80. The external supplier 80 may send a purchase order confirmation where he confirms the purchase order data.

Then the external supplier 80 delivers 73 the confirmed products according to the purchase order 61 to the consolidation location 30. In one example this delivery may comprise only a part of the ordered products according to the third-party purchase order 61. The products which are confirmed by the internal locations 40, 50 are also delivered 71, 72 from the internal locations 40, 50 to the consolidation location 30.

At the consolidation location 30 the partial deliveries from the internal locations and the external location can be merged and then shipped 70 as one single delivery or not merged and shipped as multiple deliveries from the consolidation location 30 to the customer 10.

In a further embodiment, several products may be provided only by external suppliers. If the customer order 60 comprises such a product, the supply chain management system with the supplier 20 does not perform an availability check regarding the consolidation location 30 or the internal locations 40, 50. The information whether a product is provided only by external suppliers may be also part of the information about the external suppliers and their products within the supply chain management system. Therefore, it may be possible that the whole customer order 60 is provided by an external supplier.

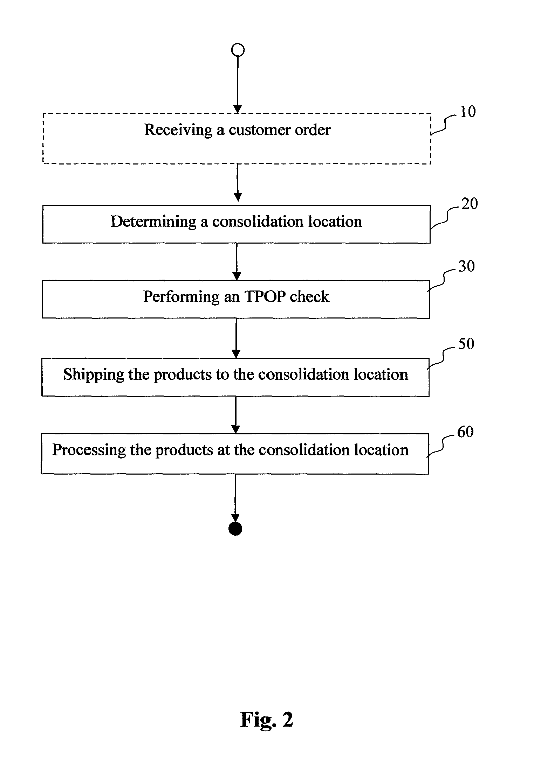

Fig. 2 illustrates a program flow of the inventive method. In step 10, an order from a customer is received. Based on the received order, a consolidation location for the products is determined in step 20. Then a step 30 is performed comprising a TPOP check (which is a check for relevant info records, contracts or scheduling agreements for the external supplier) for at least a part of the products at a location which is external to the supply chain management system. In step 50, the products found to be available at the external location are shipped to the consolidation location. Finally, in step 60 the products are processed at the consolidation location.

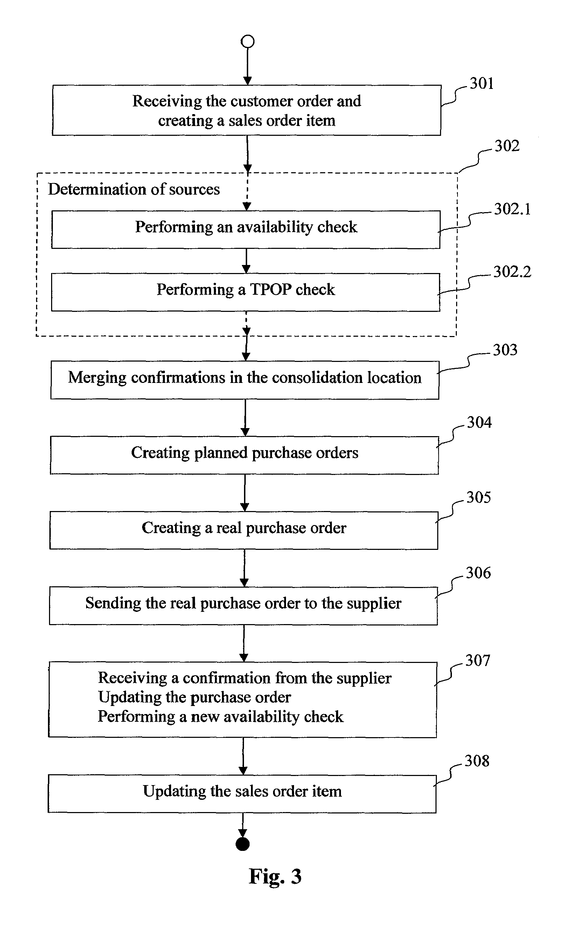

Fig. 3 shows a detailed program flow of a part of the inventive method. In the first step 301, the customer order comprising the ordered products and the quantity thereof is obtained. Within this step 301, sales order items are created out of the customer order.

In the second step 302, comprising sub-steps 302.1 and 302.2, the sourcing locations are determined and checked for availability. The sourcing locations are the locations where the requested products according to the customer order are located. The product data comprises a TPOP indicator having one of the following values:
- Always from supplier;
- Non TPOP;
- Mixed.

The value 'Always from supplier' indicates that the product is provided always by an external supplier. The value 'Non TPOP' indicates that the product is provided by an internal location. And the value 'Mixed' indicates that the product is provided by an internal location or an external supplier.

Within step 302 the sub-step 302.1 is performed first.

In sub-step 302.1 an availability check is performed. The availability check may be a rules-based availability check or a non-rules-based availability check:
- The rules-based availability check determines and finds at least one ATP rule comprising a consolidation location and substitution requirements, for example other internal locations or product alternatives. For at least one requirement TPOP is switched on. The consolidation location may also be provided by the online transaction processing system (OLTP) which sent the order to the supply chain management system, for example a customer relationship management system (CRM).
- If a non-rules-based availability check is switched on but a consolidation location is given as override from the order and the check instruction defines that TPOP is switched on, then this results in the same processing and result structures as if ATP rules would have been switched on.

Check instructions are settings in the supply chain management system specifying the methods or processes to be executed, as well as the execution of the rules-based availability check. The check instruction comprises two indicators for TPOP:
- SOS_EXECUTE (Start Source Determination);
- SOS_EXECUTE_METH. (Source Determination Method).

These indicators define how the source determination is executed in order to find a supplier. Valid values for the field SOS_EXECUTE are:
- First availability check, then TPOP check,
- TPOP immediately, or
- Only availability check.

In the first case the basic methods for performing an availability check at internal locations are combined with the methods for performing an TPOP check for the external supplier. In the second case TPOP is performed immediately. The basic methods for performing an availability check at internal locations are not performed. In the third case only the basic methods for performing an availability check at internal locations are executed, in that case TPOP is turned off.

The field value SOS_EXECUTE_METH specifies how the TPOP check has to be done. Valid values for the field SOS_EXECUTE_METH are:
- Check against contracts;
- Check against scheduling agreements;
- Check against contracts and scheduling agreements;
- Check against contracts and info record;
- Check against scheduling agreements and info records;
- Check against contracts or scheduling agreements or info records;
- No check against contract or scheduling agreements (blank).

A valid combination of the two indicator values may be:
- SOS_EXECUTE:: First availability check, then TPOP check;
- SOS_EXECUTE_METH:: Check against contracts.

Assuming the check instruction leads to a TPOP check the system continues with the next sub-step 302.2: a TPOP check is performed according to the check instruction of the determined substitution requirement in step 302.1. Checking against scheduling agreements may be done only in combination with the redirection of the corresponding scheduling agreements. A scheduling agreement normally exist only between external suppliers and internal suppliers (internal locations) which control quantities and dates of products to be delivered from the external supplier to the internal supplier. In the case that the deliveries from the external suppliers has to be consolidated in the consolidation location the scheduling agreements between the external suppliers and the consolidation location has to be checked. Therefore, the scheduling agreements have to be redirected to the consolidation location. The TPOP check determines one or more suppliers which can provide the required products. If TPOP determines more than one supplier than the first one is used.

The result of the second step 302 is a plurality of products confirmed by internal locations (in sub-step 302.1) and external locations (in sub-step 302.2).

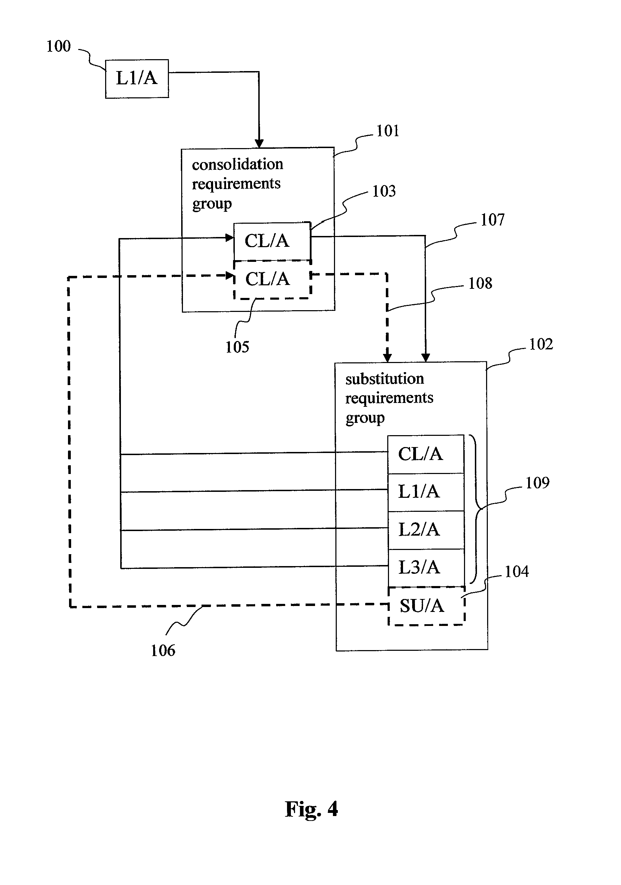

These confirmations from all sourcing locations (internal and external) are merged and consolidated in the next step 303. Within this step 303 a controller structure is build-up, whereby for confirmations from external sourcing locations a separate consolidation requirement within the consolidation requirement group is created in order to distinguish between internal and external locations. This is necessary since the supply chain management system has to trigger several special processes, for example creation of orders or creation of vendor invoices, for the products from external suppliers. How the controller structure is build-up in one embodiment of the inventive method is shown more detailed below in Fig. 4.

In the next step 304 after the saving the customer order, planned purchase orders, also called purchase requisition, are created. A planned purchase order has the supplier location as delivering location and the consolidation location as receiving location. These planned purchase orders are converted in step 305 to real purchase orders. A real purchase order represents a request to a vendor, an external supplier or a plant to deliver a certain quantity of a product or to perform certain services at a certain point in time. Afterwards the planned purchase orders are deleted.

The method continues with step 306 wherein the real purchase orders are sent to the external supplier. The external supplier checks the received real purchase orders and can send back a confirmation. If the confirmation from the supplier is different from the real purchase order, then the real purchase order has to be updated with the confirmation dates in step 307. For example the confirmation can have different quantities and/or different delivery dates. A new availability check has to be done. The availability check is triggered during the update of the real purchase order. The availability check performs a standard availability check against the updated real purchase order.

Within the next step 308 the sales order items are updated according to the updated purchase orders, if a purchase order update was made. If the external supplier cancels the purchase order completely, this external supplier is stored with the respective sales order item. When triggering a further availability check for this sales order item the system hands over this supplier as external exclusion. That way it is assured that the availability check does not select the same supplier again.

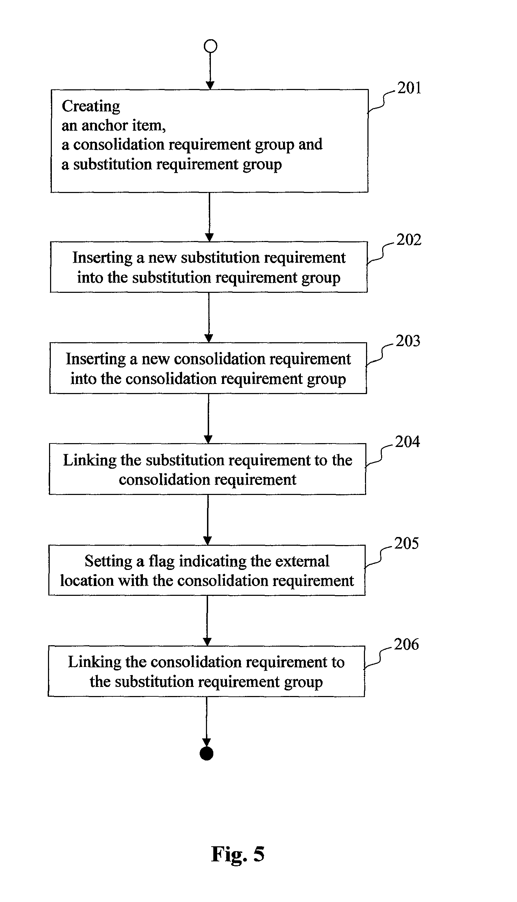

Fig. 4 illustrates a controller structure, and Fig. 5 illustrates a program flow for building-up the controller structure. In Fig. 4 the product A is consolidated in consolidation location CL. The location determination finds the internal locations L1, L2 and L3 which are checked for product availability. In addition for the last substitution requirement L3 TPOP is switched on which lead to the supplier location SU.

The controller structure consists of an anchor item 100 which is linked with a consolidation requirement group 101. The consolidation requirement group 101 comprises the consolidation requirements 103 and 105. Each consolidation requirement 103, 105 is linked 107, 108 with the substitution requirement group 102. The consolidation requirement 103 represents the consolidation requirement for the internal locations L1, L2, L3 and CL. The consolidation requirement 105 represents the consolidation requirement for the supplier location 104. The substitution requirement group 102 comprises the substitution requirements 109 according to the result of the location determination. Furthermore the substitution requirement group 102 comprises the TPOP substitution requirement 104. Each of the substitution requirements 109 is linked 110 with the consolidation requirement 103. The substitution requirement 104 is linked 106 with the consolidation requirement 105.

Building-up the controller structure, shown in Fig. 5, starts by creating the anchor item 100 in step 201. Within step 201 the consolidation requirement group 101 and the substitution requirement group 102 are created. The anchor item 100 is linked to the consolidation requirement group 101. Within step 201 the method creates the consolidation requirement 103 and inserts this into the consolidation requirement group 101. The substitution requirements 109 are also created and inserted into the substitution requirement group 102. The substitution requirement group 102 is inserted as a successor into the substitution requirement 103 by creating a link 107 between the consolidation requirement 103 and the substitution requirement group 102. The substitution requirements 109 are also linked 110 to the consolidation requirement 103. The intermediate result is a controller structure containing all substitution requirements 109 and the consolidation requirement 103 according to the internal locations.

In the next step 202 the new substitution requirement 104 for the external location - the supplier location - is inserted into the substitution requirement group 102. In order to distinguish between internal and external locations in the next step 203 a new consolidation requirement 105 with respect to the new substitution requirement 104 is inserted into the consolidation requirement group 101.

Within the following step 204 the consolidation requirement 105 is inserted as a successor 106 into the substitution requirement 104.

In step 205 a flag is set within the consolidation requirement 105 which indicates that the consolidation requirement 105 is representing a requirement containing external product locations.

Finally, in step 206 the consolidation requirement 105 is linked 108 to the substitution requirement group 102.

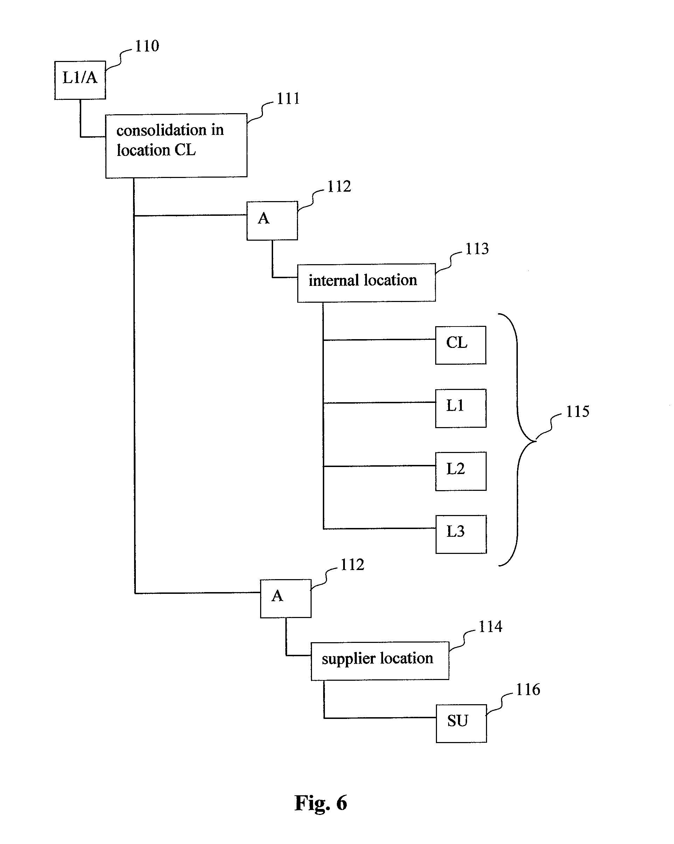

Fig. 6 shows a tree representation according to the controller structure shown in Fig. 4. The inventive method builds-up a tree representation out of the controller structure. A tree representation may be used for example for visualizing the controller structure. In such a tree representation it is useful to distinguish between confirmations coming from internal locations and confirmations coming from external locations.

In one embodiment, the tree representation is build-up within the main memory. This means, that the tree representation is not stored in a data storage. At first, the method creates a root node 110, the anchor item. The root node represents the location product L1/A. As a next step the node 111 representing the consolidation in consolidation location CL is created and linked as a child node to the root node 110.

Now, two nodes 112 are created representing the product A which are consolidated in the consolidation location. These two nodes 112 are inserted as child nodes of the consolidation node 111 into the tree representation. For the first location node 112 a child node 113 is created which summarizes the internal locations. Below the child node 113 nodes 115 for each internal location are created. For the second location node 112 a child node 114 is created which summarizes the external locations. Below the child node 114 nodes 116 for each external location are created.

In one embodiment, only one product node 112 may be created, whereby the location nodes 113, 114 may be created as child nodes of the product node 112.

This tree representation represents the fact that the confirmations coming from internal locations and the confirmations coming from external locations are separated.

The present techniques can be implemented in digital electronic circuitry, or in computer hardware, firmware, software, or in combinations of them. Apparatus of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

The computer systems or distributed computer networks as mentioned above may be used, for example, for producing goods, delivering parts for assembling products, controlling technical or economical processes, or implementing telecommunication activities.

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

In the foregoing specification, the invention has been described with reference to specific embodiments thereof. It will, however, be evident that various modifications and changes can be made thereto without departing from the broader spirit and scope of the invention as set forth in the appended claims. The specification and drawings are, accordingly, to be regarded in an illustrative rather than a restrictive sense.

## Claims

1. A computer-implemented method for processing, within a supply chain management system, a product order received from a customer, the method comprising the following steps:
determining, based on the received order, a consolidation location for the products;
performing a TPOP check for at least a part of the products at a location which is external with respect to the supply chain management system;
shipping the products found to be available at the external location to the consolidation location; and
processing the products at the consolidation location.

2. The computer-implemented method of claim 1, wherein the consolidation location is an internal location with respect to the supply chain management system.

3. The computer-implemented method of claim 1, further comprising:
performing, based on the determined consolidation location, an availability-to-promise check for a part of the products at a location which is internal with respect to the supply chain management system; and
processing the products found to be available at the internal location at the consolidation location.

4. The computer-implemented method of claim 3, wherein the at least one internal location belongs to a supplier of the products.

5. The computer-implemented method of claim 1, further comprising a step of shipping the processed products from the consolidation location to the customer.

6. The computer-implemented method of claim 3, further comprising a step of shipping the processed products within one delivery from the consolidation location to the customer.

7. The computer-implemented method of claim 1, wherein the step of determining a consolidation location comprises evaluating a number of rules which specify a number of consolidation locations.

8. The computer-implemented method of claim 7, wherein the at least one rule further specifies a substitution requirement which initiates third party order processing.

9. The computer-implemented method of claim 1, wherein the consolidation location is specified by a system which is external with respect to the supply chain management system.

10. An apparatus comprising
a data storage device within a supply chain management system for storing at least data about a plurality of products ;
means for receiving and processing a customer order;
means for determining at least one consolidation location;
means for performing a TPOP check for products at a location which is external with respect to the supply chain management system;
means for shipping products from the external location to the consolidation location; and
means for processing the products at the consolidation location.

11. The apparatus of claim 10, further comprising means for performing the method according to claim 1.

12. The apparatus of claim 11, wherein the means for performing the method is a supply chain management system.

13. A computer-readable medium comprising computer-executable instructions for performing the method according to claim 1, when loaded into a computer system.
